# EUROPÄISCHE PATENTSCHRIFT

(11) **EP 3 906 770 B1**
(45) Veröffentlichungstag und Bekanntmachung des Hinweises auf die Patenterteilung: **13.09.2023**
(21) Anmeldenummer: 21156546.0
(22) Anmeldetag: 11.02.2021
(51) Int. Cl.: A01D 41/14, A01D 69/00, A01F 12/56, A01D 43/08, A01D 69/06, A01D 43/10

(54) **ANTRIEBSSYSTEM FÜR EINE SELBSTFAHRENDE ERNTEMASCHINE**
DRIVE SYSTEM FOR A SELF-PROPELLED HARVESTING MACHINE
SYSTÈME D'ENTRAÎNEMENT POUR UN ENGIN D'ABATTAGE-FAÇONNAGE AUTONOME

(30) Priorität: 04.05.2020 DE 102020111993
(43) Veröffentlichungstag der Anmeldung: 10.11.2021
(73) Patentinhaber: CLAAS Selbstfahrende Erntemaschinen GmbH, 33428 Harsewinkel (DE)
(72) Erfinder: SCHIEWER, Stefan, 48231 Warendorf (DE); LÜTKESCHÜMER, Malte, 49090 Osnabrück (DE); POPPENBORG, Maik, 33428 Marienfeld (DE); GRAUTE, Mathias, 48161 Münster (DE)
(74) Vertreter: CLAAS Gruppe

(56) Entgegenhaltungen:
- EP-A1- 3 228 175
- DE-A1-102009 028 094
- DE-A1-102014 108 026
- DE-A1-102015 107 092

## Beschreibung

Die vorliegende Erfindung betrifft ein Antriebssystem für eine selbstfahrende Erntemaschine gemäß dem Oberbegriff des Anspruches 1. Weiterhin betrifft die Erfindung eine selbstfahrende Erntemaschine gemäß dem Anspruch 11.

Die Tendenz zu immer größeren Maschinenbreiten in der Landwirtschaft führt dazu, dass die Arbeitsorgane für selbstfahrende Erntemaschinen, insbesondere für Feldhäcksler, für immer größere Erntegutdurchsätze ausgelegt werden müssen. Durch die Verwendung eines klappbaren Vorsatzgerätes, wie etwa eines Maisgebisses, kann die Breite eines Feldhäckslers im Feldeinsatz dessen Breite bei der Fahrt auf einem öffentlichen Verkehrsweg um ein Mehrfaches überschreiten. Proportional zur Breite des Vorsatzgerätes nimmt die Menge des Erntegutes, das pro Zeiteinheit geschnitten und aufgenommen werden kann, zu. Die Breite der Arbeitsaggregate kann nicht in gleichem Maße gesteigert werden, da diese durch die Karosseriebreite des Feldhäckslers begrenzt ist und ein zu breiter Feldhäcksler nicht mehr am öffentlichen Straßenverkehr teilnehmen dürfte.

Aus der DE 10 2014 108 026 A1 ist ein Antriebssystem für eine selbstfahrende Erntemaschine gemäß dem Oberbegriff des Anspruches 1 bekannt. Das Antriebssystem umfasst einen Antriebsmotor, ein von dem Antriebsmotor angetriebenes Verteilergetriebe mit einer an einer Antriebswelle angeordneten Abtriebsriemenscheibe, welche mittels eines Hauptantriebsriemens zumindest eine endseitig auf einer Messertrommelwelle angeordnete Hauptriemenscheibe einer rotierenden Messertrommel antreibt sowie eine Konditioniereinrichtung und einen Auswurfbeschleuniger, und mindestens eine von dem Antriebsmotor angetriebene Hydraulikpumpe zum Antrieb eines Vorsatzgerätes und einer Einzugsvorrichtung. Dem Verteilergetriebe ist auf der Antriebswelle eine zweite Abtriebsriemenscheibe zugeordnet, die mittels des zweiten Riemens die mindestens eine Hydraulikpumpe antreibt. Die zweite Abtriebsriemenscheibe zum Antreiben der Hydraulikpumpe ist parallel zu der ersten Abtriebsriemenscheibe des Verteilergetriebes angeordnet ist. Der Hauptantriebsriemen und der zweite Riemen verlaufen parallel zueinander auf einer Maschinenseite. Weiterhin sind zum Antreiben von Vorsatzgerät und Einzugsvorrichtung Gelenkwellen parallel neben dem Hauptantriebsriemen auf der gleichen Seite des Antriebssystems angeordnet. Die gemäß der DE 10 2014 108 026 A1 bekannte Anordnung der leistungsübertragenden Baugruppen beschränkt die Arbeitsbreite der gutbearbeitenden Arbeitsorgane, d.h. insbesondere der Einzugsvorrichtung mit ihren Vorpresswalzen und Einzugswalzen sowie der nachgeordneten Messertrommel. Dies hat zur Folge, dass für die Elemente des Antriebssystems in der Breite der Erntemaschine weniger Bauraum zur Verfügung steht, da die Maschinenbreite aufgrund von Straßenverkehrsvorschriften nicht weiter erhöht werden kann.

Der Erfindung liegt somit die Aufgabe zu Grunde, ein Antriebssystem der eingangs genannten Art derart weiterzubilden, dass das Antriebssystem kompakter aufgebaut ist und dabei zum Antreiben verschiedenster Vorsatzgeräte in unterschiedlichen Betriebsmodi einschließlich einer Reversierfunktion eingerichtet ist.

Diese Aufgabe wird durch ein Antriebssystem gemäß dem Oberbegriff des Anspruches 1 in Verbindung mit den kennzeichnenden Merkmalen gelöst. Vorteilhafte Weiterbildungen sind Gegenstand der vom Anspruch 1 abhängigen Unteransprüche. Weiterhin wird die Aufgabe durch eine selbstfahrende Erntemaschine gemäß den Merkmalen des Anspruches 11 gelöst.

Gemäß dem Anspruch 1 wird ein Antriebssystem für eine selbstfahrende Erntemaschine vorgeschlagen, wobei das Antriebssystem einen Antriebsmotor, ein von dem Antriebsmotor angetriebenes Verteilergetriebe mit einer an einer Antriebswelle des Verteilergetriebes angeordneten Abtriebsriemenscheibe, welche mittels eines Hauptantriebsriemens zumindest eine endseitig auf einer Messertrommelwelle angeordnete Hauptriemenscheibe einer rotierenden Messertrommel antreibt sowie eine Konditioniereinrichtung und einen Auswurfbeschleuniger, und mindestens eine von dem Antriebsmotor angetriebene Hydraulikpumpe zum hydraulischen Antreiben eines Vorsatzgerätes und/oder einer Einzugsvorrichtung umfasst. Erfindungsgemäß ist vorgesehen, dass die Abtriebsriemenscheibe, der Hauptantriebsriemen und die Hauptriemenscheibe einen Hauptantriebsstrang zum Antreiben der Messertrommel, der Konditioniereinrichtung sowie des Auswurfbeschleunigers bilden, und dass das Vorsatzgerät und die Einzugsvorrichtung jeweils von einem separaten Antriebsstrang angetrieben sind, wobei zumindest eine auf der Seite des Hauptantriebsstranges angeordnete Gelenkwelle in einer gemeinsamen vertikalen Ebene mit dem Hauptantriebsriemen liegend angeordnet ist. Die gemeinsame Ebene erstreckt sich in Hochrichtung der Erntemaschine. Durch ein derart aufgelöstes Antriebssystem wird der erforderliche Bauraumbedarf reduziert, so dass die Arbeitsbreite der gutbearbeitenden Arbeitsorgane vergrößert werden kann. Das erfindungsgemäß aufgelöste Antriebssystem kann besser in die durch die Verbreiterung der Arbeitsorgane kleiner gewordenen Freiräume integriert werden, indem der Hauptantriebsriemen und die der Maschinenseite der Erntemaschine zugeordnete mindestens eine Gelenkwelle in einer Ebene übereinanderliegend angeordnet sind und nicht, wie im Stand der Technik vorgesehen, nebeneinander.

Gemäß einer bevorzugten Ausführungsform kann der separate Antriebsstrang zum Antreiben des Vorsatzgerätes in der gemeinsamen vertikalen Ebene mit dem Hauptantriebsriemen liegend angeordnet sein.

Dabei können die separaten Antriebsstränge zum Antreiben des Vorsatzgerätes sowie der Einzugsvorrichtung im Wesentlichen innerhalb der Riemenbreite des Hauptantriebsriemens liegend angeordnet sein. Die Anordnung der separaten Antriebsstränge im Wesentlichen innerhalb der Riemenbreite des Hauptantriebsriemens führt dazu, dass bezogen auf die Gesamtbreite der Erntemaschine bzw. des Feldhäckslers Bauraum frei wird, welcher der Verbreiterung der Arbeitsbreite der Arbeitsorgane zu Gute kommt.

Insbesondere kann der separate Antriebsstrang zum Antreiben des Vorsatzgerätes unterhalb und der separate Antriebsstrang zum Antreiben der Einzugsvorrichtung oberhalb des Hauptantriebsriemens liegend angeordnet sein. Durch die Anordnung außerhalb der Umschlingung von Abtriebsriemenscheibe und Hauptriemenschiebe wird ein sich überschneiden oder Kreuzen des Hauptantriebsstranges und der beiden separaten, auf der gleichen Seite befindlichen Antriebsstränge vermieden.

Bevorzugt kann der separate Antriebsstrang zum Antreiben des Vorsatzgerätes achsparallel zu einer Triebachse der Erntemaschine liegend, insbesondere unterhalb oder oberhalb der Triebachse, oder sich zumindest abschnittsweise durch einen Achskörper der Triebachse erstreckend angeordnet sein. Hierdurch kann eine verbesserte Bauraumnutzung der oberhalb der Triebachse befindlichen Arbeitsorgane und des oberhalb der Triebachse befindlichen Hauptantriebsstranges erreicht werden. Insbesondere wird eine sich kreuzende bzw. überschneidende Anordnung des separaten Antriebsstranges des Vorsatzgerätes mit dem Hauptantriebsstrang vermieden.

Alternativ kann der separate Antriebsstrang zum Antreiben des Vorsatzgerätes eine Getriebe-Kupplungseinheit umfassen, die der Messertrommelwelle auf der der Hauptriemenscheibe gegenüberliegenden Seite endseitig zugeordnet ist, wobei die Getriebe-Kupplungseinheit dazu eingerichtet ist, das Vorsatzgerät mit stufenlos variabler Drehzahl hydraulisch oder mit diskreter Übersetzung leistungssummiert anzutreiben, wobei die Getriebe-Kupplungseinheit eine achsparallel zur Messertrommelwelle verlaufende Querwelle antreibt, und die Querwelle mit einer auf der Seite der Hauptriemenscheibe befindlichen Kuppeleinrichtung für den Antrieb des Vorsatzgerätes trieblich verbunden ist. Dabei kann in einer ersten Schaltstellung der Getriebe-Kupplungseinheit der Antrieb des Vorsatzgerätes rein hydraulisch stufenlos erfolgen. In einer zweiten Schaltstellung der Getriebe-Kupplungseinheit kann der Antrieb des Vorsatzgerätes leistungssummiert mit diskreter Übersetzung erfolgen, d.h. hydraulisch und zusätzlich mechanisch leistungssummiert.

Hierzu kann die Getriebe-Kupplungseinheit eine Getriebeanordnung sowie eine Antriebsriemenscheibe mit einer in die Antriebsriemenscheibe integrierten Kupplung aufweisen. Mit der Getriebeanordnung kann die Drehzahl des zumindest einen Hydraulikmotors so übersetzt bzw. eingestellt werden, dass der Hydraulikmotor in einem effizienten Betriebsbereich arbeitet. Die Antriebsriemenscheibe kann bevorzugt als Keilriemenscheibe ausgeführt sein.

Bevorzugt kann die Getriebeanordnung als Stirnradgetriebe und/oder Stirnradwinkelgetriebe und die Kupplung als Reibkupplung oder als formschlüssige Kupplung ausgeführt sein. Bei der als Reibkupplung ausgeführten Kupplung der Getriebe-Kupplungseinheit handelt es sich vorzugsweise sich um eine trockenlaufende Einscheibenkupplungslamelle. Die Kupplung kann dabei einen ersten Kupplungsteil, welcher mit der Messertrommelwelle kraftschlüssig verbunden ist, und einen gegenüber der Messertrommelwelle relativbeweglichen zweiten Kupplungsteil aufweisen, welcher mit der Antriebsriemenscheibe kraftschlüssig in Eingriff bringbar ist.

Besonders vorteilhaft ist es, wenn die Getriebeanordnung auf der Messertrommelwelle gelagert ist. Durch das drehbare Lagern der Getriebeanordnung auf der Messertrommelwelle wird das Auftreten einer Winkel- oder Längenänderung beim Verschwenken des Vorsatzgerätes vermieden, welche ansonsten in Schlauchleitungen oder einer Gelenkwelle aufgenommen werden müssten.

Weiterhin kann auf der Querwelle endseitig eine Abtriebsriemenscheibe angeordnet sein, welche durch einen Riemen mit der Antriebsriemenscheibe der Getriebe-Kupplungseinheit verbunden ist. Dabei kann der Riemen durch eine Spannvorrichtung mit veränderbarer Spannung vorgespannt sein. Insbesondere kann die Spannvorrichtung eine mittels eines Aktors, wie einen Hydraulikzylinder, einen pneumatisch betätigbaren Zylinder oder eine Feder, mit einer Kraft beaufschlagbare Spannrolle umfassen.

Die Getriebe-Kupplungseinheit ist in einem drehzahlvariablen Modus betreibbar, in welchem die Kupplung geöffnet ist, so dass der Antrieb des Vorsatzgerätes durch den zumindest einen Hydraulikmotor erfolgt. Hierdurch wird ein drehzahlvariabler Antrieb des Vorsatzgerätes ermöglicht.

Des Weiteren ist die Getriebe-Kupplungseinheit in einem leistungssummierten Modus betreibbar, in welchem die Kupplung geschlossen ist, so dass der Antrieb des Vorsatzgerätes mechanisch mittels der Messertrommelwelle und durch den zumindest einen Hydraulikmotor erfolgt. Dabei kann die vom Hydraulikmotor abgegebene Leistung minimiert werden, um die Verlustleistung zu reduzieren. Denkbar ist es aber auch, für einen rein mechanischen Antrieb des Vorsatzgerätes mit konstanter Drehzahl bei geschlossener Kupplung der Getriebe-Kupplungseinheit den Hydraulikmotor von der Getriebe-Kupplungseinheit zu entkoppeln.

Weiterhin ist die Getriebe-Kupplungseinheit in einem Reversiermodus betreibbar, in welchem die Kupplung geöffnet und die Drehrichtung des zumindest einen Hydraulikmotor invertiert ist. Auf diese Weise lassen sich Probleme im Gutfluss innerhalb der Einzugsvorrichtung und/oder des Vorsatzgerätes beheben, in dem diese reversierend angetrieben werden.

Dabei kann der Hydraulikzylinder der Spannvorrichtung im drehzahlvariablen Modus und im leistungssummierten Modus mit einem ersten Druck beaufschlagt sein, während der Hydraulikzylinder im Reversiermodus oder während eines Bremsvorganges, in welchen am Antriebsriemen Leertrum und Lasttrum wechseln, mit einem zweiten Druck beaufschlagt ist, der größer als der erste Druck ist. Um im Reversiermodus oder während eines Bremsvorganges ein Drehmoment übertragen zu können, muss sichergestellt werden, dass die Spannrolle der Spannvorrichtung durch den die Getriebe-Kupplungseinheit mit der Abtriebsriemenscheibe der Querwelle verbindenden Riemen nicht nach oben gedrückt werden kann.

Des Weiteren kann zumindest eine Hydraulikpumpe eines der separaten Antriebsstränge unmittelbar mit dem Hauptantriebsstrang verbunden sein, um die zumindest eine Hydraulikpumpe anzutreiben. Die mindestens eine Hydraulikpumpe ist somit permanent mit dem Hauptantriebsstrang verbunden. Dadurch kann ein Abbremsen des Hauptantriebsriemens und der von diesem angetriebenen Arbeitsorganen erreicht werden. Das hydraulische Antreiben der Getriebe-Kupplungseinheit durch den zumindest einen Hydraulikmotor ermöglicht einen stufenlosen Antrieb des Vorsatzgerätes mit veränderlicher Drehzahl.

Weiterhin wird die eingangs gestellte Aufgabe durch eine selbstfahrende Erntemaschine, insbesondere einen Feldhäcksler, mit einem Antriebssystem nach einem der Ansprüche 1 bis 10 gelöst.

Die selbstfahrende Erntemaschine kann alle im Zusammenhang mit dem erfindungsgemäßen Antriebssystem beschriebenen Merkmale einzeln oder in Kombination aufweisen.

Die vorliegende Erfindung wird nachstehend anhand eines in den Zeichnungen dargestellten Ausführungsbeispieles näher erläutert.

Es zeigen:
- Fig. 1: eine schematische Ansicht einer als Feldhäcksler ausgeführten selbstfahrenden Erntemaschine;
- Fig. 2: eine schematisierte perspektivische Ansicht eines Antriebssystems für eine selbstfahrende Erntemaschine;
- Fig. 3: ein vereinfachtes Antriebsschema des Antriebssystems;
- Fig. 4: schematisch eine perspektivische Ansicht einer Einzugsvorrichtung mit einer daran angeordneten Kupplungs-Getriebeeinheit;
- Fig. 5: eine schematisierte perspektivische Ansicht eines Antriebssystems für eine selbstfahrende Erntemaschine gemäß einer zweiten Ausführungsform; und
- Fig. 6: eine Seitenansicht einer linken Maschinenseite der Erntemaschine gemäß Fig. 5.

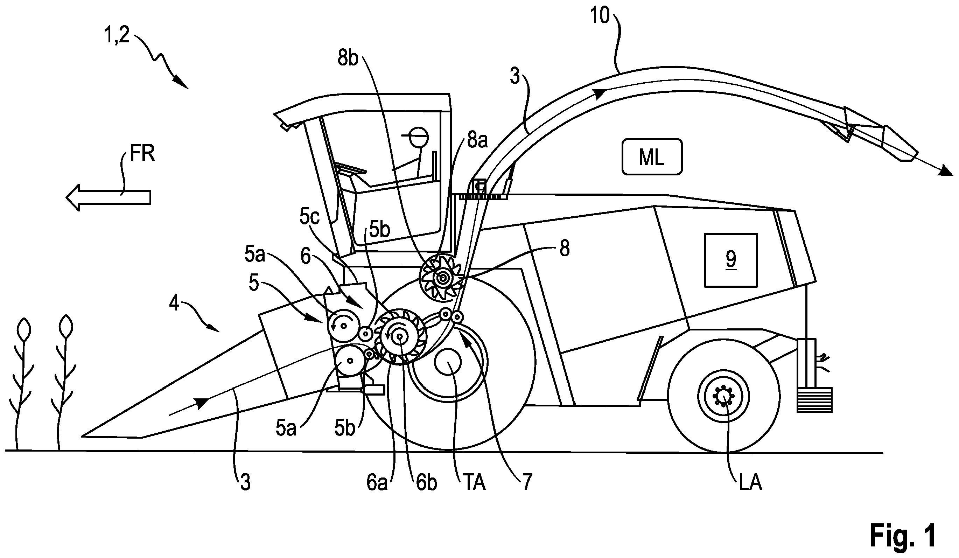

In Fig. 1 ist eine schematische Ansicht einer als Feldhäcksler 2 ausgeführten selbstfahrenden Erntemaschine 1 dargestellt. Die schematische Darstellung zeigt in Fahrtrichtung FR gesehen eine als linke Maschinenseite ML bezeichnete Ansicht der Erntemaschine 1. Die gegenüberliegende Seite wird entsprechend als rechte Maschinenseite MR bezeichnet.

Der Feldhäcksler 2 erntet beziehungsweise nimmt mittels eines Vorsatzgerätes 4 Pflanzen vom Feld auf, um anschließend das aufgenommene Erntegut 3 in Form eines Erntegutstroms (in Fig. 1 als mit Pfeilen versehene Linie angedeutet) durch Arbeitsorgane, die als Bearbeitungs- und Förderorgane des Feldhäckslers 2 ausgeführt sind, zuzuführen und mittels einer Überladeeinrichtung in einen - nicht dargestellten - Ladebehälter abzuwerfen. Die Bearbeitungs- und Förderorgane des Feldhäckslers 2 umfassen unter anderem eine Einzugsvorrichtung 5, eine Häckselvorrichtung 6, eine optionale Konditioniereinrichtung 7 sowie einen Auswurfbeschleuniger 8.

Die Einzugsvorrichtung 5 besteht aus mehreren, in einem Einzugsgehäuse 5c hintereinander angeordneten angetriebenen Walzenpaaren 5a, 5b. Das Vorsatzgerät 4 ist an die Einzugsvorrichtung 5 ankoppelbar. Die Häckselvorrichtung 6 umfasst eine rotierende, mit Messern ausgestatteten Messertrommel 6a mittels der das aufgenommene Erntegut 3 in Zusammenwirkung mit einer Gegenschneide zerkleinert wird. Die Messertrommel 6a ist auf einer angetriebenen Messertrommelwelle 6b angeordnet. Der Häckselvorrichtung 6 ist in einem Förderschacht in Gutstromförderrichtung nachgelagert die optionale Konditioniereinrichtung 7 angeordnet, die bei Bedarf aus dem Erntegutstrom entfernbar ist. Der Konditioniereinrichtung 7 im Förderschacht ist in Gutstromförderrichtung der Auswurfbeschleuniger 8 nachgelagert, welcher das Erntegut 3 mittels rotierender Wurfpaddel für den sicheren Auswurf durch die als Auswurfkrümmer ausgeführte Überladeeinrichtung 10 beschleunigt. Der Auswurfbeschleuniger 8 umfasst auf einer Welle 8b drehfest angeordnete Förderelemente 8a. Im rückwärtigen Bereich des Feldhäckslers 2 ist ein als Verbrennungsmotor ausgeführter Antriebsmotor 9 als Hauptantriebsaggregat angeordnet.

Als an die Einzugsvorrichtung 5 ankoppelbare Vorsatzgerät 4 kommen unterschiedliche Vorsatzgerätetypen zum Einsatz, die in Abhängigkeit von der zu verarbeitenden Erntegutart ausgewählt werden. Beispielsweise wird zur Aufnahme von in Schwaden abgelegtem Erntegut eine so genannte Pick-up am Feldhäcksler 2 verwendet. Für das Ernten von Ganzpflanzen kommt hingegen ein Scheibenmähwerk zum Einsatz. Beim Ernten von Mais wird ein reihenunabhängig arbeitendes Maisgebiss oder ein reihenabhängig arbeitender Maispflücker an die Einzugsvorrichtung 5 des Feldhäckslers 2 angekoppelt.

Die vorgenannten, nicht abschließend aufgezählten Vorsatzgeräte 4 unterscheiden sich hinsichtlich ihres Antriebes durch unterschiedliche Betriebsspezifikationen. So bedürfen beispielsweise das Maisgebiss oder die Pick-up einer variablen Antriebsdrehzahl, während das Scheibenmähwerk mit einer konstanten Antriebsdrehzahl arbeitet. Des Weiteren ist die Leistungsaufnahme des Scheibenmähwerkes höher als die der Pick-up oder des Maisgebisses.

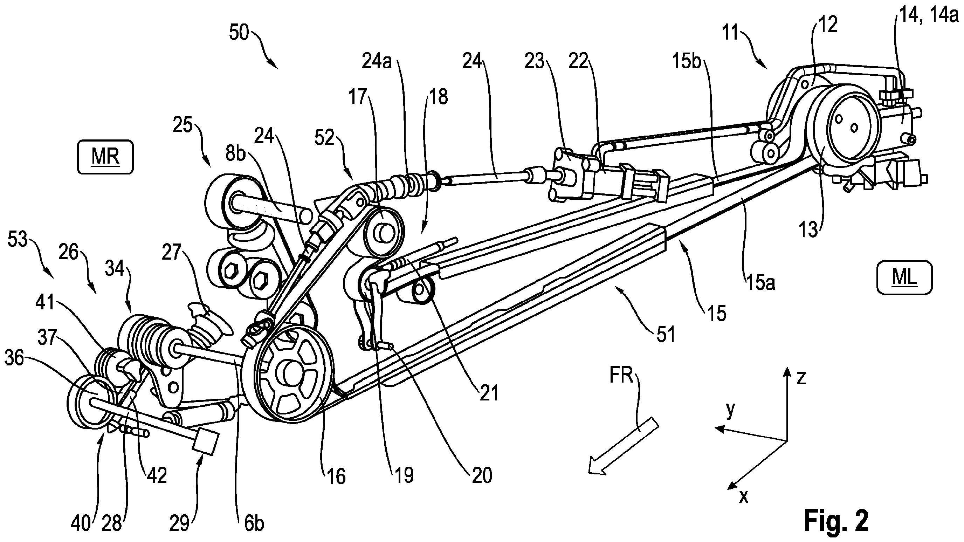

In Fig. 2 ist eine schematisierte perspektivische Ansicht eines erfindungsgemäßen Antriebssystems 50 des als Feldhäcksler 2 ausgeführten Erntemaschine 1 dargestellt. Die Darstellung zeigt lediglich die Komponenten des Antriebssystems 50, welche der Kraftübertragung zu den verschiedenen Arbeitsorganen, dem Vorsatzgerät 4, der Einzugsvorrichtung 5, der Häckselvorrichtung 6, der optionalen Konditioniereinrichtung 7 sowie dem Auswurfbeschleuniger 8, dienen. Die sich im Wesentlichen in Längsrichtung erstreckenden Antriebskomponenten der Einzugsvorrichtung 5, der Häckselvorrichtung 6 sowie des Auswurfbeschleunigers 8 sind auf der linken Maschinenseite ML angeordnet. Die sich im Wesentlichen in Längsrichtung erstreckenden Antriebskomponenten des Vorsatzgerätes 4 sowie der optionalen Konditioniereinrichtung 7 sind diesen gegenüberliegend auf der rechten Maschinenseite ML angeordnet. Die unter anderem in Fig. 2 nicht dargestellte Einzugsvorrichtung 5, Häckselvorrichtung 6, Konditioniereinrichtung 7 sowie der Auswurfbeschleuniger 8 beabstanden die Antriebskomponenten in Querrichtung y des Feldhäckslers 2 zueinander. Die vorstehend beschriebene Anordnung der Komponenten des Antriebssystems 50 kann entsprechen auch spiegelbildlich vorgesehen sein. Mit x ist eine Längsrichtung bezeichnet.

Der Antriebsmotor 9 treibt über eine - nicht dargestellte - Motorwelle ein auf der linken Maschinenseite ML angeordnetes Verteilergetriebe 11 an. Das Verteilergetriebe 11 umfasst eine auf einer ersten Antriebswelle angeordnete Abtriebsriemenscheibe 12, welche durch eine hydraulisch betätigbare Kupplung 13 mit der Motorwelle des Antriebsmotors 9 schaltbar verbunden ist. Weiterhin ist an einer zweiten Antriebswelle des Verteilergetriebes 11 zumindest eine Hydraulikpumpe 14 unmittelbar an das Verteilergetriebe 11 angeschlossen.

Durch die Abtriebsriemenscheibe 12 wird mittels eines Hauptantriebsriemens 15 zumindest eine endseitig auf der Messertrommelwelle 6b angeordnete Hauptriemenscheibe 16 angetrieben. Mit 15a ist die Unterseite und mit 15b die Oberseite des Hauptantriebsriemens 15 bezeichnet. Im regulären Betrieb bildet die Unterseite 15a den Lasttrum oder ziehenden Trum und die Oberseite 15b den Lostrum oder gezogenen Trum. Der Hauptantriebsriemen 15 treibt über eine an der Welle 8b angeordnete Riemenscheibe 17 den Auswurfbeschleuniger 8 an. Die Oberseite 15b des Hauptantriebsriemens 15 wird durch eine Spannvorrichtung 18, die eine um eine Achse 20 schwenkbare Spannrolle 19 sowie einen Hydraulikzylinder 21 umfasst, mit einer einstellbaren Spannung beaufschlagt. Die Abtriebsriemenscheibe 12, der Hauptantriebsriemen 15 und die Hauptriemenscheibe 16 bilden einen Hauptantriebsstrang 51 zum Antreiben der Messertrommel 6a, der Konditioniereinrichtung 7 sowie des Auswurfbeschleunigers 8.

Weiterhin ist auf der linken Maschinenseite ML ein Hydraulikmotor 22 angeordnet. Der Hydraulikmotor 22 ist oberhalb des Hauptantriebsriemens 15 und im Wesentlichen parallel zu diesem in einer vertikalen Ebene liegend angeordnet. Die gemeinsame Ebene erstreckt sich in Hochrichtung z der Erntemaschine 1. Der Hydraulikmotor 22 wird von der zumindest einen Hydraulikpumpe 14 angetrieben. Eine Antriebswelle des Hydraulikmotors 22 treibt ein Getriebe 23 an, welches über Gelenkwellen 24 mit der anzutreibenden Einzugsvorrichtung 5 verbunden ist. Zwischen den Gelenkwellen 24 kann zusätzlich ein Getriebe 24a angeordnet sein. Der Hydraulikmotor 22 sowie das sich daran anschließende Getriebe 23 und die Gelenkwellen 24 bilden einen separaten Antriebsstrang 52 zum Antreiben der Einzugsvorrichtung 5. Der Antriebsstrang 52 ist oberhalb des Hauptantriebsriemens 15 und mit diesem im Wesentlichen in einer gemeinsamen vertikalen Ebene liegend angeordnet. Die Gelenkwellen 24 sowie das Getriebe 24a sind somit ebenfalls im Wesentlichen parallel zum Hauptantriebsriemen 15 und in einer vertikalen Ebene zu diesem liegend angeordnet. Dabei kann der Antriebsstrang 52 von einer exakt parallelen und nur in einer vertikalen Ebene liegenden Anordnung abweichend angeordnet sein. So kann der Antriebsstrang 52 auch einen zusätzlichen Winkel quer zur Fahrtrichtung FR enthalten. Die Anordnung des separaten Antriebsstranges 52 aus Hydraulikmotor 22, Getriebe 23 sowie zumindest den Gelenkwellen 24 erfolgt im Wesentlichen innerhalb der Riemenbreite des Hauptantriebsriemens 15 und verläuft oberhalb des Hauptriemens 15 bzw. der Riemenscheibe 17. Dadurch wird bezogen auf die Gesamtbreite der Erntemaschine 1 bzw. des Feldhäckslers 2 Bauraum frei, welcher der Vergrößerung der Arbeitsbreite der Arbeitsorgane zukommt.

Auf der gegenüberliegenden rechten Maschinenseite MR sind Komponenten des Antriebssystem 50 angeordnet, mit denen das Vorsatzgerät 4 sowie die Konditioniereinrichtung 7 angetrieben werden. Zum Antrieb der Konditioniereinrichtung 7 ist ein Riementrieb 25 vorgesehen, welcher eine auf der Welle 8b angeordnete weitere Riemenscheibe umfasst. Zum Antreiben des Vorsatzgerätes 4 ein separater Antriebsstrang vorgesehen. Der separate Antriebsstrang 53 zum Antreiben des Vorsatzgerätes 4 umfasst eine auf der rechten Maschinenseite MR angeordnete Getriebe-Kupplungseinheit 26. Die Getriebe-Kupplungseinheit 26 ist durch zumindest einen Hydraulikmotor 27 angetrieben ist, welcher durch eine weitere, unmittelbar an das Verteilergetriebe 11 angeschlossene Hydraulikpumpe 14a antreibbar ist. Die Getriebe-Kupplungseinheit 26 ist zudem durch die Messertrommelwelle 6b antreibbar. Dabei ist die Getriebe-Kupplungseinheit 26 bevorzugt auf der Messertrommelmotorwelle 6b gelagert. Die Getriebe-Kupplungseinheit 26 treibt eine achsparallel zur Messertrommelwelle 6b verlaufende Querwelle 28 an, die von dem separaten Antriebsstrang 53 umfasst ist. Die Querwelle 28 ist mit einer auf der Seite der Hauptriemenscheibe 16, d.h. linken Maschinenseite ML, befindlichen Kuppeleinrichtung 29, die von dem separaten Antriebsstrang 53 umfasst ist, für den Antrieb des Vorsatzgerätes 4 trieblich verbunden. Die Querwelle 28 verläuft durch das Einzugsgehäuse 5c der Einzugsvorrichtung 5.

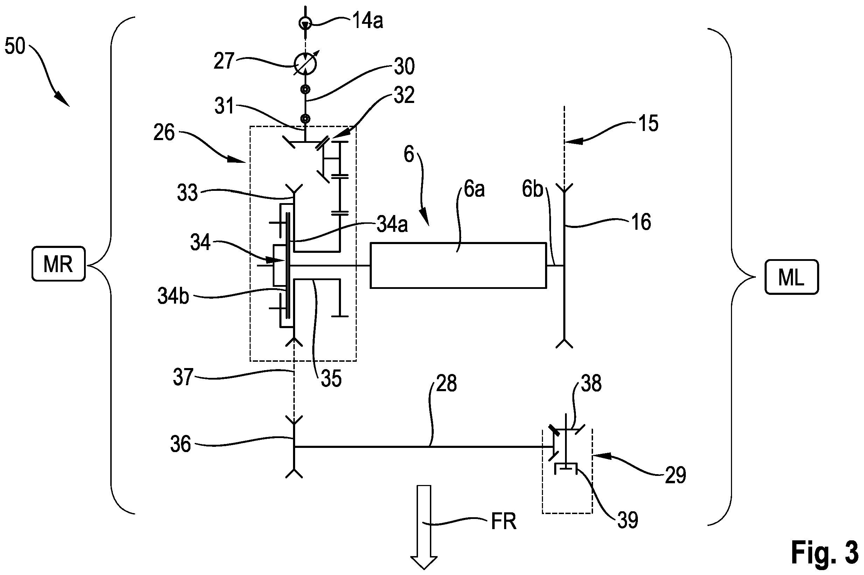

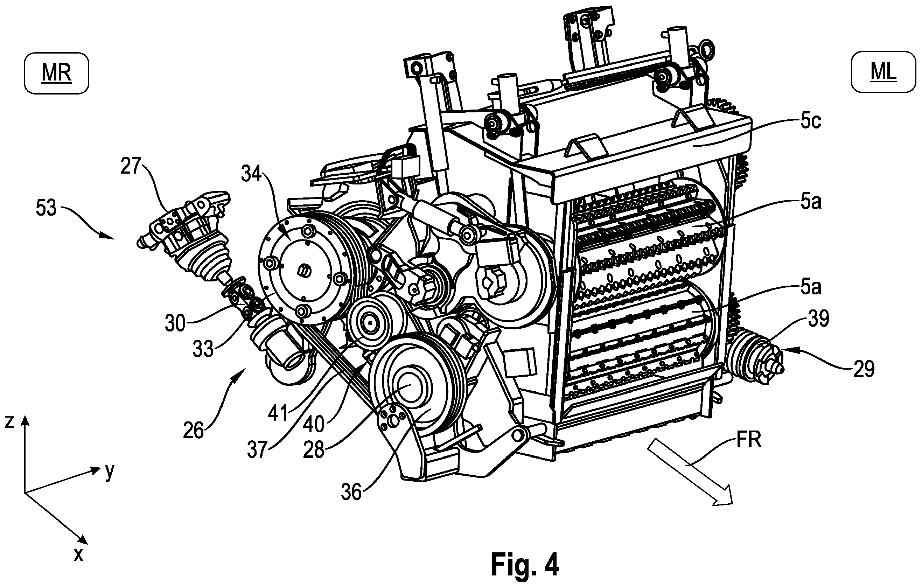

Der Aufbau und die Funktionsweise der Getriebe-Kupplungseinheit 26 wird nachfolgend anhand der Fig. 3 und Fig. 4 näher erläutert.

Die Darstellung in Fig. 3 zeigt ein vereinfachtes Antriebsschema des Antriebssystems 50. Das vereinfachte Antriebsschema zeigt dabei lediglich die für den Antrieb des Vorsatzgerätes 4 notwendigen Komponenten. Die Getriebe-Kupplungseinheit 26 ist dazu eingerichtet, das Vorsatzgerät 4 stufenlos hydraulisch oder mit diskreter Übersetzung leistungssummiert anzutreiben. Der von der Hydraulikpumpe 14a angetriebene Hydraulikmotor 27 kann durch ein Doppelgelenk 30 mit einer Eingangswelle 31 der Getriebe-Kupplungseinheit 26 verbunden sein. Die Getriebe-Kupplungseinheit 26 weist eine Getriebeanordnung 32 sowie eine Antriebsriemenscheibe 33 mit einer in die Antriebsriemenscheibe 33 integrierten Kupplung 34 auf. Die Getriebeanordnung 32 ist als Stirnradwinkelgetriebe ausgeführt. Mit der Getriebeanordnung 32 wird die Drehzahl des Hydraulikmotors 27 so übersetzt bzw. eingestellt, dass der Hydraulikmotor 27 in einem effizienten Betriebsbereich arbeitet.

Der Hydraulikmotor 27 treibt mittels der Eingangswelle 31 die Getriebeanordnung 32 an. Auf einer Ausgangswelle 35 der Getriebeanordnung 32 ist die die Antriebsriemenscheibe 33 mit der darin integrierten Kupplung 34 angeordnet. Die Getriebeanordnung 32 ist auf der Messertrommelwelle 6b gelagert. Hierzu ist die Ausgangswelle 35 relativ zur Messertrommelwelle 6b drehbeweglich auf dieser gelagert. Da die Getriebeanordnung 32 auf der Messertrommelwelle 6b drehbar gelagert ist, entsteht keine Winkel- oder Längenänderung beim Verschwenken des Vorsatzgerätes 4, welche üblicherweise von Schlauchleitungen oder einer Gelenkwelle aufgenommen werden müssten.

Die als Reibkupplung ausgeführte Kupplung 34 weist einen ersten Kupplungsteil 34a, welcher mit der Messertrommelwelle 6b formschlüssig verbunden ist, und einen gegenüber der Messertrommelwelle 6b relativbeweglichen zweiten Kupplungsteil 34b auf, welcher mit der Antriebsriemenscheibe 33 formschlüssig verbunden ist. Die beiden Kupplungsteile 34a, 34b lassen sich durch eine Beaufschlagung mit einem hydraulischen Druck betätigen, um diese miteinander reibschlüssig zu verbinden. Die als Reibkupplung ausgeführte Kupplung 34 hat den Vorteil, dass sie geräuscharm und verschleißarm arbeitet. Bei der als Reibkupplung ausgeführten Kupplung 34 kann es sich um eine trockenlaufende Einscheibenkupplungslamelle handeln. Anstelle der hydraulisch betätigen Kupplung 34 ist auch die Verwendung einer pneumatisch oder elektromechanisch betätigbaren Kupplung denkbar.

Auf der Querwelle 28 ist an ihrem Wellenende auf der rechten Maschinenseite MR endseitig eine Abtriebsriemenscheibe 36 angeordnet ist, welche durch einen Riemen 37 mit der Antriebsriemenscheibe 33 der Getriebe-Kupplungseinheit 26 verbunden ist. Der Riemen 37 ist durch eine Spannvorrichtung 40 mit veränderbarer Spannung vorgespannt. Hierzu umfasst die Spannvorrichtung 40 eine mittels eines Hydraulikzylinders 42 mit einer Kraft beaufschlagbare Spannrolle 41, welche gegen den Riemen 37 gedrückt wird.

Am gegenüberliegenden Wellenende der Querwelle 28 auf der linken Maschinenseite ML ist die Kuppeleinrichtung 29 angeordnet. Die Kuppeleinrichtung 29 umfasst ein Eingangsgetriebe 38 mit einer Kegelradstufe sowie einen Schnellkuppler 39, an den das Vorsatzgerät 4 zum Antreiben desselben angeschlossen wird. Das auf der Seite der Hauptriemenscheibe 16, d.h. der linken Maschinenseite ML befindliche Eingangsgetriebe 38 verbindet die Querwelle 28 mit dem Schnellkuppler 39 der Kuppeleinrichtung 29.

Für den stufenlosen Antrieb des Vorsatzgerätes 4 befindet sich die hydraulisch betätigbar Kupplung 34 in einer Schaltstellung, in der die beiden Kupplungsteile 34a, 34b außer Eingriff stehen, d.h. die Kupplung 34 geöffnet ist. Bei geöffneter Kupplung 34 ist die Getriebe-Kupplungseinheit 26 in einem drehzahlvariablen Modus betreibbar, so dass der Antrieb des Vorsatzgerätes 4 durch den zumindest einen Hydraulikmotor 27 erfolgt. Durch eine Ansteuerung der Drehzahl der von dem zumindest einen Hydraulikmotor 27 abgegeben Drehzahl lässt sich das Vorsatzgerät 4 drehzahlvariabel antreiben.

Um die Getriebe-Kupplungseinheit 26 in einem leistungssummierten Modus zu betreiben, wird die Kupplung 34 geschlossen. Dadurch stehen die beiden Kupplungsteile 34a, 34b kraftschlüssig miteinander in Eingriff, so dass der Antrieb des Vorsatzgerätes 4 mechanisch mittels der durch den Hauptantriebsriemen 15 angetriebenen Messertrommelwelle 6b und durch den zumindest einen Hydraulikmotor 27 erfolgt. Dabei kann die von dem Hydraulikmotor 27 abgegebene Leistung minimiert werden, um die Verlustleistung zu reduzieren. Der leistungssummierte Betrieb kann für alle Arten von Vorsatzgeräten genutzt werden. Insbesondere wird der leistungssummierte Betrieb für als Maispflücker oder Direktschneidwerke ausgeführte Vorsatzgeräte 4 genutzt, da die Drehzahl in dieser Betriebsart konstant ist.

Des Weiteren ist die Getriebe-Kupplungseinheit 26 in einem Reversiermodus betreibbar, in welchem die Kupplung 34 geöffnet und die Drehrichtung des zumindest einen Hydraulikmotor 27 invertiert ist. Auf diese Weise lassen sich Probleme im Gutfluss innerhalb der Einzugsvorrichtung 5 und/oder des Vorsatzgerätes 4 beheben, in dem diese reversierend angetrieben werden. Dazu wird auch die Drehrichtung des Hydraulikmotors 22, der die Einzugsvorrichtung 5 antreibt, invertiert. Das Invertieren der Drehrichtungen der beiden Hydraulikmotoren 22 und 27 erfolgt unabhängig voneinander. Somit lassen sich die Einzugsvorrichtung 5 und das Vorsatzgerätes 4 unabhängig voneinander auch einzeln reversieren.

Das Bremsen und Beschleunigen des Vorsatzgerätes 4 kann hydraulisch realisiert werden, wobei die Kupplung 34 dabei geöffnet ist. Zumindest eine der mit dem Hauptantriebsstrang 51 verbundenen Hydraulikpumpen 14, 14a kann zum Abbremsen verwendet werden. Durch das Öffnen der Kupplung 13 wird der Antriebsstrang zwischen dem Antriebsmotor 9 und dem Verteilergetriebe 11 unterbrochen. Die vom Hauptantriebsriemen 15 auf das Verteilergetriebe 11 übertragene Leistung der noch rotierenden Arbeitsorgane wird von zumindest einer der Hydraulikpumpen 14, 14a aufgenommen, so dass die Arbeitsorgane innerhalb von Sekunden zum Stillstand kommen.

Der Hydraulikzylinder 42 der Spannvorrichtung 40 ist im drehzahlvariablen Modus sowie im leistungssummierten Modus der Getriebe-Kupplungseinheit 26 mit einem ersten Druck beaufschlagt, während der Hydraulikzylinder 42 im Reversiermodus oder während eines Bremsvorganges, in welchen am Riemen 37 Leertrum und Lasttrum wechseln, mit einem zweiten Druck beaufschlagt ist, der größer als der erste Druck ist. Mit der Spannvorrichtung 40, die Getriebe-Kupplungseinheit 26 zugeordnet ist, kann auch im Schubumkehrfall sicher Drehmoment übertragen werden. Der hydraulische Druck, mit dem die Hydraulikzylinder 21 bzw. 42 der Spannvorrichtungen 18 und 40 versorgt werden, wird von einer Druckquelle der selbstfahrenden Erntemaschine 1 bzw. des Feldhäckslers 2 bereitgestellt.

Fig. 4 zeigt schematisch eine perspektivische Ansicht der Einzugsvorrichtung 5 mit der daran auf der rechten Maschinenseite MR angeordneten Kupplungs-Getriebeeinheit 26, der Spannvorrichtung 40 sowie der Abtriebsriemenscheibe 36 und dem Riemen 37. Auf der linken Maschinenseite ML ist die Kuppeleinrichtung 29 mit dem endseitigen Schnellkuppler 39 zu erkennen.

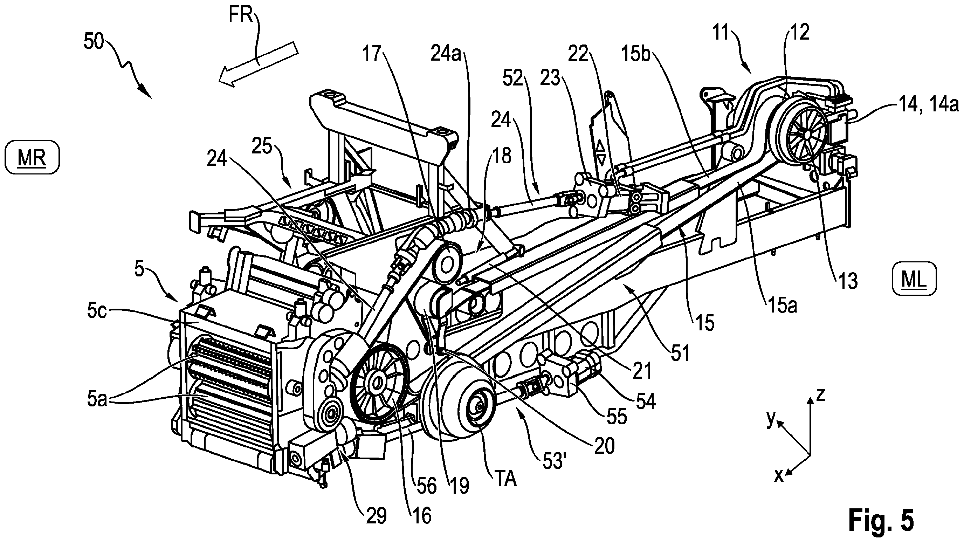

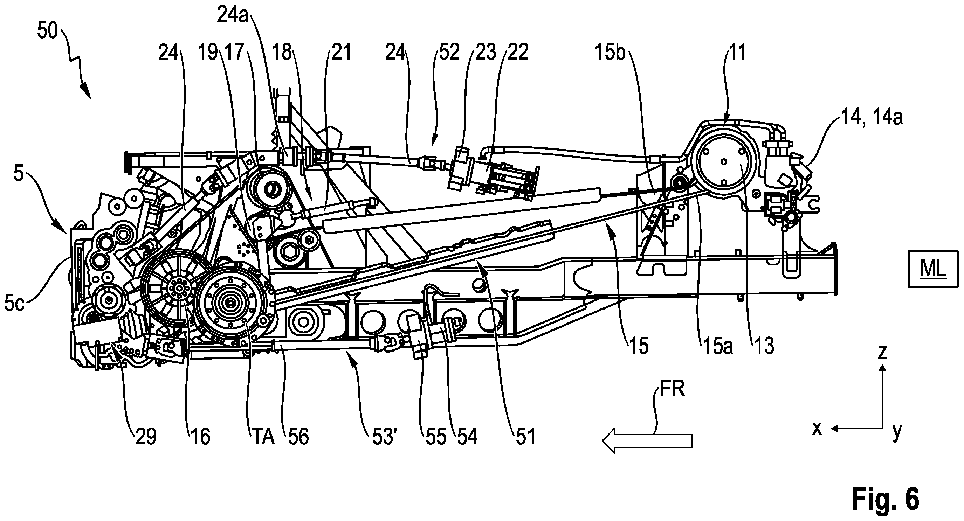

Die Darstellung in Fig. 5 zeigt eine schematisierte perspektivische Ansicht eines Antriebssystems für eine selbstfahrende Erntemaschine gemäß einer zweiten Ausführungsform und Fig. 6 zeigt eine Seitenansicht der linken Maschinenseite ML der Erntemaschine 1 gemäß Fig. 5. Für identische Bauteile des Antriebssystems 50 werden die Bezugszeichen verwendet, die bereits für die Beschreibung der Fig. 1 bis 4 Verwendung fanden.

Im Unterschied zu dem Antriebssystem 50 gemäß der ersten Ausführungsform ist anstelle des Antriebsstranges 53 ein als separater Antriebsstrang 53` zum Antreiben des Vorsatzgerätes 4 vorgesehen, welcher ebenfalls auf der linken Maschinenseite ML des Feldhäckslers 2 angeordnet ist. Der separate Antriebsstrang 53` umfasst einen Hydraulikmotor 54, ein Getriebe 55 sowie zumindest eine Gelenkwelle 56, welche mit der Kuppeleinrichtung 29 für den Antrieb des Vorsatzgerätes 4 trieblich verbunden ist. Der Hydraulikmotor 54 kann von der Hydraulikpumpe 14a gespeist werden.

Der separate Antriebsstrang 53` ist in der gemeinsamen vertikalen Ebene mit dem Hauptantriebsriemen 15 liegend angeordnet. Während der separate Antriebsstrang 52 zum Antrieben der Einzugsvorrichtung 5 oberhalb des Hauptantriebsriemens 15 angeordnet ist, verläuft der separate Antriebsstrang 53` unterhalb des Hauptantriebsriemens 15. Insbesondere ist die zumindest eine Gelenkwelle 56 des separaten Antriebsstranges 53' unterhalb der Triebachse TA angeordnet. Die separaten Antriebsstränge 52 und 53` zum Antreiben des Vorsatzgerätes 4 sowie der Einzugsvorrichtung 5 sind im Wesentlichen innerhalb der Riemenbreite des Hauptantriebsriemens 15 liegend angeordnet.

Auch dieses der zweiten Ausführungsform zugrunde liegende Konzept kann für hohe Leistungen mit einer konstanter Drehzahl angetrieben werden. Auch hierfür wird dabei der Riementrieb der Messertrommel 6 auf der auf der rechten Maschinenseite MR genutzt. Der konzeptionelle Unterschied ist entweder die Anordnung der Kupplungs-Getriebeeinheit 26 auf der rechten Maschinenseite MR, wie weiter oben beschrieben, oder der Anordnung der Gelenkwelle 56 des separaten Antriebsstranges 53' des Vorsatzgerätes 4 unterhalb des Hauptantriebsriemens 15 auf der linken Maschinenseite. Beide Ausführungsformen nutzen für den Betrieb des Vorsatzgerätes 4 mit konstanter Drehzahl den Riementrieb auf der linken Maschinenseite ML.

**Bezugszeichenliste**

| | | | |
|---|---|---|---|
| 1 | Erntemaschine | 24 | Gelenkwelle |
| 2 | Feldhäcksler | 24a | Getriebe |
| 3 | Erntegut | 25 | Riementrieb |
| 4 | Vorsatzgerät | 26 | Getriebe-Kupplungseinheit |
| 5 | Einzugsvorrichtung | 27 | Hydraulikmotor |
| 5a | Erstes Walzenpaar | 28 | Querwelle |
| 5b | Zweites Walzenpaar | 29 | Kuppeleinrichtung |
| 5c | Einzugsgehäuse | 30 | Doppelgelenk |
| 6 | Häckselvorrichtung | 31 | Eingangswelle |
| 6a | Messertrommel | 32 | Getriebeanordnung |
| 6b | Messertrommelwelle | 33 | Antriebsriemenscheibe |
| 7 | Konditioniereinrichtung | 34 | Kupplung |
| 8 | Auswurfbeschleuniger | 34a | Erstes Kupplungsteil |
| 8a | Förderelemente | 34b | Zweites Kupplungsteil |
| 8b | Welle | 35 | Ausgangswelle |
| 9 | Antriebsmotor | 36 | Abtriebsriemenscheibe |
| 10 | Überladeeinrichtung | 37 | Riemen |
| 11 | Verteilergetriebe | 38 | Eingangsgetriebe |
| 12 | Abtriebsriemenscheibe | 39 | Schnellkuppler |
| 13 | Kupplung | 40 | Spannvorrichtung |
| 14 | Hydraulikpumpe | 41 | Spannrolle |
| 14a | Hydraulikpumpe | 42 | Hydraulikzylinder |
| 15 | Hauptantriebsriemen | 50 | Antriebssystem |
| 15a | Unterseite von 15 | 51 | Hauptantriebsstrang |
| 15b | Oberseite von 15 | 52 | Antriebsstrang von 5 |
| 16 | Hauptriemenscheibe | 53 | Antriebsstrang von 4 |
| 17 | Riemenscheibe | 53' | Antriebsstrang von 4 |
| 18 | Spannvorrichtung | 54 | Hydraulikmotor |
| 19 | Spannrolle | 55 | Getriebe |
| 20 | Achse | 56 | Gelenkwelle |
| 21 | Hydraulikzylinder | FR | Fahrrichtung |
| 22 | Hydraulikmotor | ML | Linke Maschinenseite |
| 23 | Getriebe | MR | Rechte Maschinenseite |

## Patentansprüche

1. Antriebssystem (50) für eine selbstfahrende Erntemaschine (1, 2), umfassend einen Antriebsmotor (9), ein von dem Antriebsmotor (9) angetriebenes Verteilergetriebe (11) mit einer an einer Antriebswelle des Verteilergetriebes (11) angeordneten Abtriebsriemenscheibe (12), welche mittels eines Hauptantriebsriemens (15) zumindest eine endseitig auf einer Messertrommelwelle (6b) angeordnete Hauptriemenscheibe (16) einer rotierenden Messertrommel (6a) antreibt sowie eine Konditioniereinrichtung (7) und einen Auswurfbeschleuniger (8), und mindestens eine von dem Antriebsmotor (9) angetriebene Hydraulikpumpe (14, 14a) zum hydraulischen Antreiben eines Vorsatzgerätes (4) und/oder einer Einzugsvorrichtung (5), **dadurch gekennzeichnet, dass** die Abtriebsriemenscheibe (12), der Hauptantriebsriemen (15) und die Hauptriemenscheibe (16) einen Hauptantriebsstrang (51) zum Antreiben der Messertrommel (6a), der Konditioniereinrichtung (7) sowie des Auswurfbeschleunigers (8) bilden, und dass das Vorsatzgerät (4) und die Einzugsvorrichtung (5) jeweils von einem separaten Antriebsstrang (52, 53, 53`) angetrieben sind, wobei zumindest eine auf der Seite des Hauptantriebsstranges (51) angeordnete Gelenkwelle (24, 56) in einer gemeinsamen vertikalen Ebene mit dem Hauptantriebsriemen (15) liegend angeordnet ist.

2. Antriebssystem (50) nach Anspruch 1, **dadurch gekennzeichnet, dass** der separate Antriebsstrang (53') zum Antreiben des Vorsatzgerätes (4) in der gemeinsamen vertikalen Ebene mit dem Hauptantriebsriemen (15) liegend angeordnet ist.

3. Antriebssystem (50) nach Anspruch 2, **dadurch gekennzeichnet, dass** die separaten Antriebsstränge (52, 53`) zum Antreiben des Vorsatzgerätes (4) sowie der Einzugsvorrichtung (5) im Wesentlichen innerhalb der Riemenbreite des Hauptantriebsriemens (15) liegend angeordnet sind.

4. Antriebssystem (50) nach Anspruch 2 oder 3, **dadurch gekennzeichnet, dass** der separate Antriebsstrang (53`) zum Antreiben des Vorsatzgerätes (4) unterhalb und der separate Antriebsstrang (52) zum Antreiben der Einzugsvorrichtung (5) oberhalb des Hauptantriebsriemens (15) liegend angeordnet sind.

5. Antriebssystem (50) nach einem der Ansprüche 2 bis 4, **dadurch gekennzeichnet, dass** der separate Antriebsstrang (53') zum Antreiben des Vorsatzgerätes (4) achsparallel zu einer Triebachse (TA) der Erntemaschine (1, 2) liegend, insbesondere unterhalb oder oberhalb der Triebachse (TA), oder sich zumindest abschnittsweise durch einen Achskörper der Triebachse (TA) erstreckend angeordnet ist.

6. Antriebssystem (50) nach Anspruch 1, **dadurch gekennzeichnet, dass** der separate Antriebsstrang (53) zum Antreiben des Vorsatzgerätes (4) eine Getriebe-Kupplungseinheit (26) umfasst, die der Messertrommelwelle (6b) auf der der Hauptriemenscheibe (16) gegenüberliegenden Seite endseitig zugeordnet ist, wobei die Getriebe-Kupplungseinheit (26) dazu eingerichtet ist, das Vorsatzgerät (4) stufenlos hydraulisch oder mit diskreter Übersetzung leistungssummiert anzutreiben, wobei die Getriebe-Kupplungseinheit (26) eine achsparallel zur Messertrommelwelle (6b) verlaufende Querwelle (28) antreibt, und die Querwelle (28) mit einer auf der Seite der Hauptriemenscheibe (16) befindlichen Kuppeleinrichtung (29) für den Antrieb des Vorsatzgerätes (4) trieblich verbunden ist.

7. Antriebssystem (50) nach Anspruch 6, **dadurch gekennzeichnet, dass** die Getriebe-Kupplungseinheit (26) eine Getriebeanordnung (32) sowie eine Antriebsriemenscheibe (33) mit einer in die Antriebsriemenscheibe (33) integrierten Kupplung (34) aufweist.

8. Antriebssystem (50) nach Anspruch 7, **dadurch gekennzeichnet, dass** die Getriebeanordnung (32) auf der Messertrommelwelle (6b) gelagert ist.

9. Antriebssystem (50) nach einem der vorangehenden Ansprüche, **dadurch gekennzeichnet, dass** auf der Querwelle (28) endseitig eine Abtriebsriemenscheibe (36) angeordnet ist, welche durch einen Riemen (37) mit der Antriebsriemenscheibe (33) der Getriebe-Kupplungseinheit (26) verbunden ist.

10. Antriebssystem (50) nach einem der vorangehenden Ansprüche, **dadurch gekennzeichnet, dass** die jeweilige Hydraulikpumpe (14, 14a) eines separaten Antriebsstranges (52, 53, 53') unmittelbar durch das Verteilergetriebe (11) angetrieben ist.

11. Selbstfahrende Erntemaschine (1), insbesondere Feldhäcksler (2), mit einem Antriebssystem (50) nach einem der Ansprüche 1 bis 10.

## Claims

1. A drive system (50) for a self-propelled harvesting machine (1, 2), comprising a propulsion engine (9), a distribution gear (11) driven by the propulsion engine (9) with a driven belt pulley (12) disposed on a drive shaft of the distribution gear (11), which, by means of a main drive belt (15), drives at least one main belt pulley (16) of a rotary knife drum (6a) disposed on an end of a knife drum shaft (6b) as well as a conditioning device (7) and a discharge accelerator (8), and at least one hydraulic pump (14, 14a) which is driven by the propulsion engine (9) for hydraulically driving a front attachment (4) and/or an intake device (5), **characterized in that** the driven belt pulley (12), the main drive belt (15) and the main belt pulley (16) form a main drive train (51) for driving the knife drum (6a), the conditioning device (7) as well as the discharge accelerator (8), and **in that** the front attachment (4) and the intake device (5) are respectively driven by a separate drive train (52, 53, 53'), wherein at least one universal joint shaft (24, 56) disposed on the side of the main drive train (51) is disposed to lie in a common vertical plane with the main drive belt (15).

2. The drive system (50) according to claim 1, **characterized in that** the separate drive train (53') for driving the front attachment (4) is disposed to lie in the common vertical plane with the main drive belt (15).

3. The drive system (50) according to claim 2, **characterized in that** the separate drive trains (52, 53') for driving the front attachment (4) as well as the intake device (5) are disposed to lie substantially within the width of the belt of the main drive belt (15).

4. The drive system (50) according to claim 2 or claim 3, **characterized in that** the separate drive train (53') for driving the front attachment (4) is disposed to lie below the main drive belt (15) and the separate drive train (52) for driving the intake device (5) is disposed to lie above the main drive belt (15).

5. The drive system (50) according to one of claims 2 to 4, **characterized in that** the separate drive train (53') for driving the front attachment (4) is disposed to lie parallel to the axis of a drive axle (TA) of the harvesting machine (1, 2), in particular below or above the drive axle (TA), or is disposed for at least sections thereof to extend through an axle beam of the drive axle (TA).

6. The drive system (50) according to claim 1, **characterized in that** the separate drive train (53) for driving the front attachment (4) comprises a transmission and clutch unit (26) which is associated with an end of the knife drum shaft (6b) on the side opposite to the main belt pulley (16), wherein the transmission and clutch unit (26) is configured to drive the front attachment (4) in a continuously variable hydraulic manner or in a power summing manner with discrete gear ratios, wherein the transmission and clutch unit (26) drives a transverse shaft (28) which runs parallel to the axis of the knife drum shaft (6b) and the transverse shaft (28) is operatively connected to a clutch unit (29) for the drive for the front attachment (4) which is located on the side of the main belt pulley (16).

7. The drive system (50) according to claim 6, **characterized in that** the transmission and clutch unit (26) has a transmission assembly (32) as well as a drive belt pulley (33) with a clutch (34) integrated into the drive belt pulley (33).

8. The drive system (50) according to claim 7, **characterized in that** the transmission assembly (32) is mounted on the knife drum shaft (6b).

9. The drive system (50) according to one of the preceding claims, **characterized in that** a driven belt pulley (36) is disposed at an end of the transverse shaft (28) and is connected by means of a belt (37) to the drive belt pulley (33) of the transmission and clutch unit (26).

10. The drive system (50) according to one of the preceding claims, **characterized in that** the respective hydraulic pump (14, 14a) of a separate drive train (52, 53, 53') is driven directly by means of the distribution gear (11).

11. A self-propelled harvesting machine (1), in particular a forage harvester (2), with a drive system (50) according to one of claims 1 to 10.

## Revendications

1. Système d'entraînement (50) pour une machine de récolte automotrice (1,2), incluant un moteur d'entraînement (9), un engrenage distributeur (11) entraîné par le moteur d'entraînement (9) avec une poulie menée (12) disposée sur un arbre d'entraînement de l'engrenage distributeur (11), laquelle entraîne, au moyen d'une courroie d'entraînement principal (15), au moins une poulie principale (16) d'un tambour porte-couteaux rotatif (6a) disposée en bout sur un arbre de tambour porte-couteaux (6b) ainsi qu'un équipement de conditionnement (7) et un accélérateur d'éjection (8), et au moins une pompe hydraulique (14, 14a) entraînée par le moteur d'entraînement (9) pour l'entraînement hydraulique d'un outil frontal (4) et/ou d'un dispositif d'amenée (5), **caractérisé en ce que** la poulie menée (12), la courroie d'entraînement principal (15) et la poulie principale (16) forment une chaîne de transmission principale (51) pour l'entraînement du tambour porte-couteaux (6a), de l'équipement de conditionnement (7) ainsi que de l'accélérateur d'éjection (8), et **en ce que** l'outil frontal (4) et le dispositif d'amenée (5) sont entraînés respectivement par une chaîne de transmission séparée (52, 53, 53'), au moins un arbre articulé (24, 56) disposée sur le côté de la chaîne de transmission principale (51) étant disposé dans un plan commun vertical avec la courroie d'entraînement principal (15).

2. Système d'entraînement (50) selon la revendication 1, **caractérisé en ce que** la chaîne de transmission séparée (53') pour l'entraînement de l'outil frontal (4) est disposée dans le plan commun vertical avec la courroie d'entraînement principal (15).

3. Système d'entraînement (50) selon la revendication 2, **caractérisé en ce que** les chaînes de transmission séparées (52, 53') pour l'entraînement de l'outil frontal (4) ainsi que du dispositif d'amenée (5) sont disposées sensiblement à l'intérieur de la largeur de courroie de la courroie d'entraînement principal (15) .

4. Système d'entraînement (50) selon la revendication 2 ou 3, **caractérisé en ce que** la chaîne de transmission séparée (53') pour l'entraînement de l'outil frontal (4) est disposée au-dessous de la courroie d'entraînement principal (15) et la chaîne de transmission séparée (52) pour l'entraînement du dispositif d'amenée (5) est disposée au-dessus.

5. Système d'entraînement (50) selon une des revendications 2 à 4, **caractérisé en ce que** la chaîne de transmission séparée (53') pour l'entraînement de l'outil frontal (4) est disposée de manière parallèle axialement à un essieu moteur (TA) de la machine de récolte (1,2), en particulier au-dessous ou au-dessus de l'essieu moteur (TA), ou en s'étendant au moins par portions à travers un corps d'essieu de l'essieu moteur (TA).

6. Système d'entraînement (50) selon la revendication 1, **caractérisé en ce que** la chaîne de transmission séparée (53) pour l'entraînement de l'outil frontal (4) inclut une unité d'accouplement de transmission (26) qui est associée en bout à l'arbre de tambour porte-couteaux (6b) sur le côté opposé à la poulie principale (16), l'unité d'accouplement de transmission (26) étant agencée pour entraîner l'outil frontal (4) hydrauliquement de façon continue ou en puissance cumulée avec une démultiplication discrète, l'unité d'accouplement de transmission (26) entraînant un arbre transversal (28) s'étendant de manière parallèle axialement à l'arbre de tambour porte-couteaux (6b), et l'arbre transversal (28) étant relié de manière motrice à un équipement de couplage (29) situé sur le côté de la poulie principale (16) pour l'entraînement de l'outil frontal (4).

7. Système d'entraînement (50) selon la revendication 6, **caractérisé en ce que** l'unité d'accouplement de transmission (26) comporte un agencement de transmission (32) ainsi qu'une poulie menante (33) avec un accouplement (34) intégré dans la poulie menante (33).

8. Système d'entraînement (50) selon la revendication 7, **caractérisé en ce que** l'agencement de transmission (32) est monté sur l'arbre de tambour porte-couteaux (6b).

9. Système d'entraînement (50) selon une des revendications précédentes, **caractérisé en ce que** sur l'arbre transversal (28) est montée en bout une poulie menée (36) qui est reliée par l'intermédiaire d'une courroie (37) à la poulie menante (33) de l'unité d'accouplement de transmission (26).

10. Système d'entraînement (50) selon une des revendications précédentes, **caractérisé en ce que** la pompe hydraulique respective (14, 14a) d'une chaîne de transmission séparée (52, 53, 53') est entraînée directement par l'intermédiaire de l'engrenage distributeur (11).

11. Machine de récolte automotrice (1), en particulier ensileuse (2), comprenant un système d'entraînement (50) selon une des revendications 1 à 10.
